(19) Europäisches Patentamt
European Patent Office
Office européen des brevets

(11) **EP 2 553 345 B1**

(12) **FASCICULE DE BREVET EUROPEEN**

(45) Date de publication et mention
de la délivrance du brevet:
**19.08.2015 Bulletin 2015/34**

(51) Int Cl.:
**F24D 19/10** *(2006.01)* **G05D 23/19** *(2006.01)*
**G01K 17/08** *(2006.01)* **F24F 11/00** *(2006.01)*

(21) Numéro de dépôt: **11709956.4**

(22) Date de dépôt: **24.03.2011**

(86) Numéro de dépôt international:
**PCT/EP2011/054551**

(87) Numéro de publication internationale:
**WO 2011/117356 (29.09.2011 Gazette 2011/39)**

(54) **DISPOSITIF POUR L'ANALYSE DU COMPORTEMENT THERMIQUE EN REGIME TRANSITOIRE D'UN LOCAL EQUIPE D'UNE INSTALLATION DE CHAUFFAGE OU DE CLIMATISATION**

VORRICHTUNG ZUR ANALYSE DES WÄRMEVERHALTENS IM ÜBERGANGSZUSTAND EINES RAUMS MIT EINER HEIZ- ODER KLIMAANLAGE

DEVICE FOR ANALYZING THE THERMAL BEHAVIOUR IN TRANSIENT REGIME OF A ROOM EQUIPPED WITH A HEATING OR AIR-CONDITIONING UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.03.2010 FR 1001207**

(43) Date de publication de la demande:
**06.02.2013 Bulletin 2013/06**

(73) Titulaires:
• **Pouliquen, Hervé**
  **92140 Clamart (FR)**
• **Aschheim, Raymond**
  **92130 Issy-Les-Moulineaux (FR)**

(72) Inventeurs:
• **Pouliquen, Hervé**
  **92140 Clamart (FR)**
• **Aschheim, Raymond**
  **92130 Issy-Les-Moulineaux (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A2- 0 165 899    DE-A1- 3 703 833**
**FR-A1- 2 506 937    FR-A1- 2 694 983**
**FR-A1- 2 739 931**

## Description

L'invention concerne un dispositif pour l'analyse du comportement en régime transitoire d'un local équipé d'une installation de chauffage ou de climatisation. Elle concerne également une installation équipée d'un tel dispositif.

Les perspectives de prix croissant de l'énergie, la contrainte climatique, les risques de sécurité énergétique, ont mis les économies d'énergie au centre des politiques énergétiques et de développement durable de nombreux pays. Dans le domaine des bâtiments, la réduction des consommations d'énergie devient une préoccupation majeure.

Un système permettant de connaître le comportement thermique en régime transitoire d'un Local, comportement représenté par un modèle, peut avoir de multiples applications. On entend par Local, une pièce, un logement (appartement, maison individuelle, etc.), un ou plusieurs bureaux, etc... Le régime transitoire d'un système est décrit par l'évolution temporelle de ses variables. On l'oppose au régime permanent où les variables sont stabilisées. La connaissance du modèle thermique d'un Local capable de décrire son comportement en régime transitoire, comme il est décrit plus loin, permet par exemple les applications suivantes :

- concevoir des systèmes de contrôle-commande performants du système de chauffage ;
- effectuer des prévisions de la consommation d'énergie de chauffage ;
- connaître les caractéristiques thermiques de locaux dans le cadre du diagnostic de performance énergétique des bâtiments ;
- etc.

La consommation de chauffage des logements neufs ou récents est maîtrisée selon la réglementation thermique en vigueur au moment de la construction. Cette réglementation devient de plus en plus sévère. Il va donc devenir nécessaire de disposer de dispositif de contrôle précis de la performance énergétique de ces bâtiments.

Les consommations de chauffage des logements anciens, en majorité dans le parc des bâtiments, sont importantes et pourraient être sensiblement diminuées, pour améliorer le confort et réduire les charges d'énergie. Il y a là un grand besoin de dispositifs nouveaux permettant de mieux connaître le comportement thermique des logements anciens.

Le problème de la réduction des consommations d'énergie de chauffage dans les bâtiments est complexe. Les dispositifs de contrôle-commande doivent viser à résoudre les problèmes suivants : connaître les caractéristiques du bâtiment ; s'adapter aux évolutions climatiques extérieures ; permettre une consommation d'énergie la plus basse possible en fonction du confort souhaité, informer l'utilisateur des économies réalisées pour juger de la qualité du dispositif de contrôle-commande installé ou des améliorations apportées au Local. La variation des prix de l'électricité en fonction du moment de la journée va devenir plus importante, ce qui va rendre utile les dispositifs permettant de connaître le comportement thermique en régime transitoire d'un Local équipé d'un système de chauffage.

Le dispositif objet de l'invention, tel que défini dans la revendication 1, apporte une solution à ces problèmes. Cette solution consiste à établir un modèle du comportement thermique en régime transitoire d'un Local par un procédé innovant dans le but de l'utiliser notamment pour concevoir une régulation du système ou installation de chauffage, ou de faire des prévisions de consommation ou tout autre application nécessitant une connaissance précise du comportement thermique du Local équipé d'un système de chauffage.

Le dispositif objet de l'invention s'applique également aux systèmes ou installations de climatisation.

En fonction dudit modèle une fois établi, le dispositif selon l'invention produit aussi une Référence temporelle de la consommation de chauffage qui peut permettre notamment de donner à l'occupant une estimation des économies d'énergie de chauffage. A notre connaissance, la production de cette Référence temporelle, caractéristique du Local équipé de son système de chauffage, constitue un apport original. Notamment, cette Référence est utile à l'occupant comme base de comparaison afin de vérifier l'intérêt ou la rentabilité d'un système ou d'un service d'économies d'énergie, ou encore d'une modification apportée aux caractéristiques thermiques du Local.

Dans le but d'aider à économiser l'énergie dans les bâtiments, il existe des méthodes qui rendent compte du comportement thermique d'un Local en régime permanent. Notamment, le diagnostic de performance énergétique (DPE) d'un Local, fait l'objet d'une méthode couramment utilisée et préconisée par le Ministère (méthode 3CL-DPE). En effet, le diagnostic de performance énergétique d'un Local est un élément nécessaire par exemple :

- lors de transactions immobilières (achat/vente, location) pour connaître la situation énergétique d'un logement ou plus généralement de tout Local ;
- pour réaliser de façon efficace la rénovation d'un logement ;
- pour la réception d'un bâtiment neuf qui doit respecter un niveau donné de performance énergétique ;
- pour contribuer à réduire et optimiser la consommation de chauffage d'un logement.

La méthode 3CL-DPE est toutefois jugée insuffisamment efficace et coûteuse par de nombreux professionnels. Le dispositif objet de l'invention a pour objet de proposer une méthode facile à mettre en oeuvre, plus fiable et plus précise en ce qu'elle s'appuie sur des mesures et peut analyser le comportement thermique du Local en régime transitoire. Apportant plus d'informations et de précision, elle peut répondre aux différents points d'utilité listés à l'alinéa précédent.

Pour caractériser le comportement thermique d'un Local, on utilise aussi une représentation graphique appelée signature énergétique. Comme le décrivent les demandes de brevets FR 2 506 937 "Procédé et appareil pour analyser la consommation énergétique d'un bâtiment" et FR 0 165 899 "Appareil permettant de relever la signature énergétique d'un bâtiment", la signature énergétique est une relation que l'on suppose linéaire d'une grandeur représentant les taux d'activité P de l'installation de chauffage en fonction de la température extérieure. Ou dit autrement, la signature énergétique est définie par une relation sensiblement linéaire qui existe entre la puissance dissipée et la température extérieure.

La droite

$$P = P_0 - S_{sign} < \theta_{ext} > \qquad \text{(équation 1)}$$

de pente $S_{sign}$ est appelée signature énergétique avec $< \theta_{ext} >$ température extérieure moyenne et P puissance dissipée.

On entend par taux d'activité P (représentatif de la puissance dissipée par le Local), pendant une période de temps donnée, le rapport entre le temps pendant lequel l'installation de chauffage fonctionne et le temps pendant lequel celle-ci ne fonctionne pas. Pratiquement, le procédé selon le brevet n°2 506 937 effectue les mesures tous les intervalles de temps $\Delta t$ (il est indiqué par exemple toutes les minutes) et procède automatiquement au calcul d'une moyenne des résultats de mesures tous les $n\Delta t$ (il est indiqué par exemple toutes les heures) ; le taux d'activité est donc connu sur $n\Delta t$. Le procédé selon la demande de brevet EP 0 165 899 est plus précis puisqu'il rend compte du taux d'activité tous les $\Delta t$.

Il est à noter que le procédé selon la demande de brevet FR 2 506 937 indique la possibilité de mesurer la température intérieure mais qu'il n'est pas dit comment celle-ci intervient dans la détermination de la signature énergétique.

Un document FR 2 739 931 décrit un procédé pour mesurer le coefficient volumique de déperdition thermique d'un local chauffé électriquement.

Les procédés décrits dans ces demandes de brevets exploitent la relation physique classique qui explique les pertes thermiques en régime permanent établi par transmission à travers des parois, à l'aide de la formule du flux thermique de déperdition $\phi$ :

En régime permanent établi, à tout instant, on a égalité entre le flux d'énergie qui pénètre dans une paroi par l'intérieur, celui qui traverse le mur et celui qui ressort à l'extérieur ; $\phi$ est le flux d'énergie échangé entre l'intérieur et l'extérieur par l'intermédiaire de la paroi.

$$\phi = K\ S\ (\theta_i - \theta_{ext}) \qquad\qquad \text{(équation 2)}$$

$\theta_i$ est la température intérieure du Local, $\theta_{ext}$ la température extérieure, S la surface de la paroi.

K est le coefficient de transmission thermique qui dépend, des caractéristiques des matériaux qui composent la paroi et de leur épaisseur, du rayonnement des parois et de la convection dans l'air côté intérieur et extérieur. K est une conductance. Pour déterminer la valeur de K, le diagnostic de performance énergétique tel que celui utilisant la méthode 3CL-DPE s'appuie sur la description des matériaux du Local identifiés par un opérateur. Voir ARRETE portant approbation de diverses méthodes de calcul pour le diagnostic de performance énergétique en France métropolitaine, NOR : SOCU 06 10 563 A, dans lequel K S est le produit ENV fois V, V étant le volume du Local.

Selon l'équation 2, le calcul du flux est conduit en régime permanent établi ;
Introduisons la notion de résistance thermique tel que :

$$R = 1/KS.$$

Si l'on considère une période de durée petite dt, l'énergie dissipée par le Local est égale à :

$$dE = (1/R)\ (\theta_i - \theta_{ext})\ dt$$

Pendant une période allant d'une date $t_1$ à une date $t_2$, l'énergie dissipée par le Local est :

$$E = (1/R) \int_{t_1}^{t_2} (\theta_i - \theta_{ext})\, dt$$

En valeur moyenne sur l'intervalle [t1, t2], on peut écrire le bilan thermique du Local :

$$E = (1/R)\ (<\theta_i> - <\theta_{ext}>) \qquad (\text{équation } 3)$$

D'où, en correspondance avec l'équation 1, $(1/R) = S_{sign}$ et $P_0 = (1/R) < \theta_i >$ ; on note que l'ordonnée à l'origine $P_0$ de la droite de signature énergétique donnée par l'équation 1 est fonction de la température intérieure. La signature énergétique varie en fonction de différentes températures intérieures comme l'indique la demande de brevet FR 2 506 937.

On observe que les relations ci-dessus utilisées dans les brevets précités représentent le comportement thermique du Local en régime permanent. Or, dans la réalité, il s'agit de régime non permanent. Par exemple, on peut approcher le calcul en régime non permanent par une modélisation électrique faisant intervenir une ou plusieurs résistances et un ou plusieurs condensateurs. Les condensateurs font intervenir les effets de l'inertie thermique, notamment celle de la paroi. Le comportement thermique est dès lors affecté selon ce modèle résistance (par exemple $R_1$), condensateur (par exemple $C_1$) par une constante de temps de valeur $R_1 C_1$. Le dispositif selon l'invention s'intéresse comme il sera détaillé dans la suite au comportement thermique en régime transitoire du Local ce qui le distingue fondamentalement des dispositifs des autres brevets qui sont applicables en régime permanent établi.

Lorsque le comportement thermique en régime transitoire du Local peut être connu, au travers d'un modèle comme l'établit le dispositif selon l'invention, il est alors possible de donner l'évolution temporelle des grandeurs physiques caractéristiques du Local (comme la température intérieure) soumis aux variations des éléments extérieurs (comme la température, etc.), et aux variations des éléments intérieurs (comme le chauffage, etc.). Ainsi, il est possible de donner une représentation temporelle précise du comportement thermique du Local qui permet de définir par exemple, pour chercher à économiser l'énergie, une régulation efficace de la température intérieure du Local ou encore de prévoir les évolutions de la consommation de chauffage dans différentes conditions.

En effet, il faut en particulier noter, pour voir tout l'intérêt de connaître et d'utiliser un modèle en régime transitoire, que les constantes de temps de variations des éléments extérieurs et intérieurs sont souvent du même ordre de grandeur que les constantes de temps du modèle thermique du Local. Raisonner en régime permanent établi simplifie les équations mais conduit à négliger beaucoup de phénomènes, empêchant d'obtenir des solutions optimales ou de disposer d'informations précises pour agir efficacement et au bon moment.

Dans ce sens, on notera l'existence de la demande de brevet FR 2 694 983 "Procédé et dispositif pour la régulation optimale de la température d'un Local", qui montre l'intérêt, à partir de la connaissance d'un modèle thermique du Local en régime transitoire, de la mise en oeuvre d'une régulation optimale de la température intérieure. La régulation optimale qui minimise un critère objectif, objet de cette invention, s'appuie sur un modèle du premier ordre de l'évolution de la température du Local sous l'action d'un chauffage.

En ce qui concerne la pratique du diagnostic de performance énergétique (DPE), l'utilisation du dispositif selon l'invention présente les avantages suivants par rapport aux autres méthodes de diagnostic :

- Les autres méthodes s'appuient sur une description du Local selon ses différents matériaux (mur, plancher, isolant, etc.) et dimensions ou quantité de ces matériaux. Or, les constructions sont réalisées de façon imparfaite ; les matériaux vieillissent ; les dimensions peuvent être saisies avec des erreurs ; de plus, un opérateur sur place est nécessaire pour caractériser le Local de cette manière.

Les incertitudes sur chaque variable utilisée dans ces méthodes ne sont pas incluses dans les calculs ce qui n'est pas satisfaisant. Cumulées, ces incertitudes risquent de conduire à rendre le diagnostic imprécis et source de mauvaises utilisations ou décisions par la suite.

A l'inverse, le dispositif selon l'invention effectue des mesures, directement dans le Local et près du Local pour la température extérieure ; le dispositif va donc tenir compte des imperfections de construction : effets du vieillissement, etc.

Pour mieux rendre compte des caractéristiques effectives du Local, le dispositif selon l'invention est donc préférable. De plus, le diagnostic par le dispositif selon l'invention étant automatisé, il n'est a priori pas source d'erreurs sauf dysfonctionnement du matériel électronique ou numérique utilisé.

Les autres méthodes ont besoin d'un opérateur qualifié qui vient faire le diagnostic sur le site du Local. Par contre, le dispositif selon l'invention réalise le diagnostic de façon automatique ; mis à part les capteurs des grandeurs physiques à mesurer au niveau du Local, les signaux ou informations électroniques ou numériques qui sortent de ces capteurs peuvent être soit traités sur place au sein du calculateur de l'équipement par le dispositif selon l'invention, soit enregistrés, soit envoyés via internet par exemple ou tout autre moyen vers un centre de calcul pour y être traités. Le dispositif selon l'invention est entièrement automatisable et utilise les facilités du numérique et des télécommunications.

Le diagnostic de performance énergétique du Local par le dispositif selon l'invention peut être facilement répété plusieurs fois dans différentes circonstances pour chercher à augmenter la précision des résultats.

La présente invention se propose notamment de pallier les inconvénients susmentionnés des méthodes qui établissent un modèle thermique du Local en régime permanent établi. A cet effet, l'invention a pour objet un dispositif d'analyse du comportement thermique en régime transitoire d'un Local équipé d'une installation de chauffage ou de climatisation, ledit dispositif comportant au moins :

- des moyens destinés à fournir une mesure représentative de la température extérieure du Local ;
- des moyens destinés à fournir une mesure représentative de la température intérieure du Local ;
- des moyens de commande permettant d'agir sur la mise en fonctionnement ou l'arrêt de ladite installation pour créer des variations de la température intérieure du Local ;
- des moyens donnant une information ou une mesure de la puissance de chauffage ou climatisation du Local ;
- des moyens de traitement utilisant un modèle thermique d'évolution en régime transitoire de la température intérieure du Local équipé de ladite installation, organisés selon une chaîne qui comprend au moins un moyen d'extraction de séries desdites mesures, un moyen de filtrage desdites mesures et un moyen d'identification pour déterminer les coefficients caractéristiques de l'équation dudit modèle thermique en régime transitoire,

ledit modèle comportant une combinaison de fonctions exponentielles du temps ou leur simplification, lesdits coefficients fournissant au moins un élément de type résistance traduisant des déperditions thermiques et au moins un élément de type capacité traduisant du stockage thermique, et la température intérieure évoluant sous l'effet de la température extérieure et d'une puissance de chauffage ou de climatisation injectée par ladite installation, lesdites mesures étant opérées à intervalle de temps suffisamment court pour rendre compte de l'évolution instantanée de la température intérieure caractérisant le régime transitoire.

Le modèle est par exemple du second ordre intégrant :

- les déperditions thermiques au travers de l'enveloppe du Local (sols, murs, vitrage, portes et plafonds ou couverture, etc.) représentées sous la forme d'une résistance ;
- la capacité thermique de la masse à chauffer, représentée par une capacité ;
- les échanges thermiques entre ladite installation et l'air ambiant représentés sous la forme d'une résistance ;
- la capacité thermique de l'ensemble de ladite installation, représentée par une capacité ;
- la température extérieure, simulée par une source de tension ;
- le flux thermique généré par ladite installation représenté par une source de courant, et donné par la puissance de chauffage ou climatisation ;

Dans un mode de réalisation particulier :

- ledit modèle est représenté par une équation caractéristique discrète du second ordre établie pour chaque instant d'échantillonnage $nT_e$ (n entier naturel, n>1) séparé de l'instant suivant par un intervalle de temps $T_e = \Delta t$ (période d'échantillonnage), ladite équation étant définie de la façon suivante :

$$\theta_i \ (nT_e) = \ \theta_{ext} \ (nT_e) \ + \ \lambda_0 \ + \ \lambda_1 \ e^{\ -(nTe)/\tau 1} \ +$$

$$\lambda_2 \ e^{-(nTe)/\tau 2},$$

$\lambda_0, \lambda_1, \lambda_2$, étant liés, à $\tau_1$ et $\tau_2$ les deux constantes de temps caractéristiques dudit modèle reliées auxdites résistances et capacités, à $\phi_{ch}$ le flux thermique généré par ladite installation,
$\theta_{ext}$ étant la température extérieure au Local,
et, $\lambda_0, \lambda_1, \lambda_2$, étant, dans ce cas, les coefficients caractéristiques identifiés par ledit moyen d'identification.

Les moyens de traitement sont par exemple agencés pour déterminer les coefficients $\lambda_0, \lambda_1, \lambda_2$, de ladite équation caractéristique à partir desdits moyens de traitement, de l'information de la puissance maximale de chauffage et desdites mesures de la température intérieure et la température extérieure prises durant un intervalle de temps de variation de température du Local sous l'effet du chauffage ou de la climatisation ou durant un intervalle de temps de coupure du chauffage ou de la climatisation du Local.

- lesdits moyens de commande coupent pendant une durée $n_2\Delta t$ ($n_2$ entier naturel) le chauffage ou la climatisation pour faire varier la température intérieure du Local puis le remettent en fonctionnement pour varier en sens inverse la température intérieure jusqu'à la température de consigne de chauffage ou climatisation, le chauffage ou la climatisation fonctionnant alors à sa puissance maximale ;
- ledit moyen d'extraction réalise l'extraction d'une série de mesures prises aux instants d'échantillonnage sur une durée $n_1\Delta t$ ($n_1$ entier naturel) pendant la variation de température ;
- ledit moyen de filtrage supprime les bruits qui perturbent l'analyse du régime transitoire et l'identification ;
- ledit moyen d'identification détermine lesdites constantes de temps caractéristiques $\tau_1$ et $\tau_2$ précitées, à partir, notamment, du principe d'une méthode graphique dite de la tangente déterminant le positionnement de cette tangente à partir de la détermination de l'instant d'annulation de la dérivée (au sens mathématique) de la différence entre la température intérieure et la température extérieure,
- ledit moyen d'identification identifie lesdits coefficients caractéristiques $\lambda_0$, $\lambda_1$, $\lambda_2$, de ladite équation caractéristique dudit modèle thermique en régime transitoire à partir : des mesures aux instants d'échantillonnage de la température extérieure et de la température intérieure, de l'information de la puissance maximale de chauffage ou de climatisation du Local et des fonctions exponentielles de ladite équation comprenant lesdites constantes de temps $\tau_1$ et $\tau_2$.

Dans un autre mode de réalisation particulier, ledit modèle est un modèle récursif sous forme discrète de période d'échantillonnage $T_e$ décrivant le comportement thermique en régime transitoire du Local équipé de ladite installation, sous la forme d'une équation du premier ordre de gain $K_0$ et de constante de temps caractéristique $\tau$, tel que :

$$s(nT_e) = \alpha\, s[(n-1)T_e] + \beta\, \phi_{ch}[(n-1)T_e]$$

et ce modèle ayant par ailleurs une réponse de type exponentielle du premier ordre en sortie si on lui applique un échelon de chauffage ou climatisation en entrée,
et $\alpha$ et $\beta$ étant les coefficients caractéristiques identifiés par ledit moyen d'identification,
[0041] Avec :

$s(nT_e) = \theta_i(nT_e) - \theta_{ext}(nT_e)$, mesure de la différence à l'instant d'échantillonnage $nT_e$ de la mesure de la température intérieure et de la température extérieure.
$s[(n-1)T_e] = \theta_i[(n-1)T_e] - \theta_{ext}[(n-1)T_e]$, mesure de la différence à l'instant d'échantillonnage précédent $(n-1)T_e$ de la mesure de la température intérieure et de la température extérieure.
$\phi_{ch}[(n-1)T_e]$ mesure de la puissance de chauffage ou climatisation du Local à l'instant d'échantillonnage précédent $(n-1)T_e$.
$\alpha$ et $\beta$ étant liés à $K_0$ et $\tau$ par :

$$\alpha = \exp(-T_e/\tau)\; et\; \beta = (1 - \alpha)\, K_0$$

Et, en ce que lesdits moyens de traitement réalisent l'identification de $K_0$ et de $\tau$ pendant le fonctionnement normal de ladite installation de chauffage ou climatisation, de façon récursive au fur et à mesure de l'acquisition desdites mesures de la température intérieure, de la température extérieure et de la puissance de chauffage ou de climatisation, à chaque instant d'échantillonnage $nT_e$ séparé de l'instant suivant par un intervalle de temps $T_e = \Delta t$.
Le dispositif comporte par exemple des moyens destinés à fournir, la consigne de chauffage ou climatisation du Local, une chronique de la température extérieure sur une période de temps, et une régulation de la température intérieure pour élaborer une Référence temporelle de la consommation de chauffage ou climatisation du Local sur ladite période de temps à partir de l'équation caractéristique dudit modèle dont lesdits coefficients caractéristiques ont été obtenus par lesdits moyens et à partir de la simulation de ladite régulation qui donne la consommation de chauffage ou climatisation nécessaire pour maintenir la température intérieure au voisinage de la consigne de chauffage ou climatisation du Local.
Le dispositif comporte par exemple des moyens pour fournir une mesure représentative du flux solaire apportant une quantité de chaleur au Local, pour conférer à la Référence temporelle de la consommation de chauffage ou climatisation du Local une évolution tenant compte de l'évolution temporelle du flux solaire.

Pour fournir une évaluation des économies de la consommation de chauffage ou climatisation du Local entre une période de temps D dans une année x, et la même période D de temps dans une année x+1 étant donné une modification des caractéristiques thermique du Local ou de l'installation de chauffage ou climatisation entre l'année x et l'année x+1, les moyens de traitement effectuent par exemple les étapes suivantes :

- calcul de la Référence temporelle de la consommation de chauffage ou climatisation durant la période D dans l'année x ($R_{efconsx}$), à partir desdits coefficients caractéristiques identifiés, d'une consigne de chauffage ou climatisation du Local et d'une chronique de la température extérieure durant la période D dans l'année x ;
- ajustement desdits coefficients caractéristiques de l'équation caractéristique dudit modèle thermique en fonction de la consommation réelle de chauffage ou climatisation durant la période D dans l'année x ;

- identification des nouveaux coefficients caractéristiques de l'équation caractéristique dudit modèle thermique du Local l'année x+1 ;
- calcul de la Référence temporelle de la consommation de chauffage ou climatisation durant la même période D dans l'année x+1 ($R_{efconsx+1}$), à partir des nouveaux coefficients caractéristiques identifiés, de la même consigne de chauffage ou climatisation et de la même chronique de la température extérieure que durant la période D dans l'année x ;
- détermination de l'économie de la consommation de chauffage ou climatisation $R_{efconsx+1}$ - $R_{efconsx}$.

L'invention concerne également une installation de chauffage ou de climatisation équipée d'un dispositif tel que décrit précédemment.
La présente invention sera mieux comprise en référence à la description de l'exemple suivant et des dessins annexés qui illustrent l'invention et les résultats obtenus par une maquette réalisée, et permettent de décrire plus finement ses caractéristiques :

- La figure 1 représente la partie du dispositif selon l'invention permettant l'identification d'une équation caractéristique d'un modèle thermique en régime transitoire du Local équipé d'une installation de chauffage. L'exemple est celui d'une installation de chauffage mais l'invention s'applique tout aussi bien à une installation de climatisation.

- La figure 2 représente un exemple de modèle des échanges thermiques d'un Local équipé de ladite installation ; Les éléments $R_1$, $C_1$ sont caractéristiques du bâti et $R_2$, $C_2$ du système de chauffage.
- La figure 3 représente le schéma de principe d'échantillonnage d'un système dans le cas de l'utilisation d'une commande numérique.
- La figure 4 représente deux exemples d'évolution de la température intérieure du Local, lors d'une séquence de mise en température du Local 4a) et après la coupure du chauffage 4b).
- La figure 5 représente l'organigramme du procédé d'identification des coefficients d'une équation caractéristique d'un modèle thermique du Local équipé de ladite installation à partir des mesures des températures extérieure et intérieure et de l'information de la puissance maximale de chauffage du Local et de l'utilisation d'un moyen d'action sur la commande de chauffage.
- La figure 6 représente un résultat du procédé numérique selon l'invention de la méthode graphique de la tangente pour déterminer les constantes de temps caractéristiques $\tau_1$ et $\tau_2$ du modèle thermique du Local, dans la maquette du dispositif selon l'invention.
- La figure 7 représente le résultat de l'identification des coefficients de l'équation caractéristique d'un modèle thermique du Local, dans la maquette du dispositif selon l'invention : 7a) Résultat de l'identification des coefficients $\lambda_0$, $\lambda_1$, $\lambda_2$ explicités ci-après et 7b) Résultat donnant la comparaison entre la mesure de la différence de température $\theta_i$ - $\theta_{ext}$ et l'évolution temporelle de cette différence donnée par le modèle issu du dispositif selon l'invention.
- La figure 8 représente la partie du dispositif selon l'invention permettant la détermination de la Référence temporelle de la consommation de chauffage : 9a) Dispositif de réalisation de la Référence temporelle de la consommation de chauffage du Local à partir d'un modèle prédéfini et 9b) Dispositif de réalisation de la Référence temporelle de la consommation de chauffage par le modèle issu de l'identification d'une équation caractéristique d'un modèle donnant le comportement thermique en régime transitoire du Local selon l'invention.
- La figure 9 représente un résultat de la maquette montrant la montée en température du Local obtenue à partir de l'équation caractéristique d'un modèle thermique dont les coefficients ont été identifiés par le dispositif selon l'invention.
- La figure 10 représente un résultat de la maquette montrant la montée en température intérieure du Local et son évolution pendant une journée.
- La figure 11 représente un système de chauffage intelligent équipé du dispositif selon l'invention permettant l'identification d'une équation caractéristique d'un modèle donnant le comportement thermique en régime transitoire du Local et permettant l'élaboration de la Référence temporelle de la consommation de chauffage du Local.

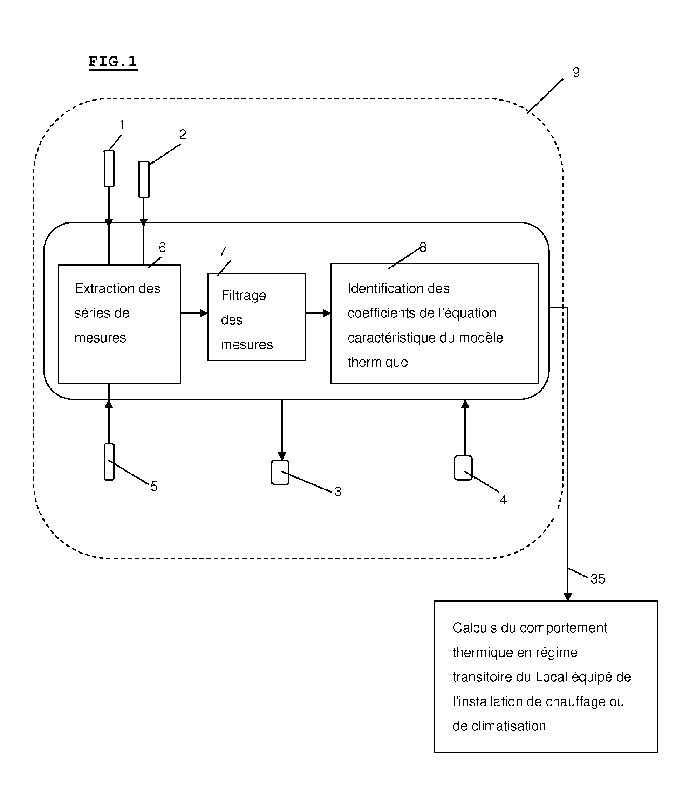

Le schéma de principe du dispositif 9 est décrit figure 1 : il nécessite des mesures de la température extérieure 1, de la température intérieure 2 et selon la façon de réaliser l'identification des coefficients 35 d'une équation caractéristique d'un modèle donnant le comportement thermique en régime transitoire du Local équipé de ladite installation, par les deux modes de réalisation précités du dispositif selon l'invention, soit un moyen d'action sur la commande de chauffage du Local 3 et l'information de la puissance maximale de chauffage du Local 4, soit la mesure de la puissance de chauffage du Local 5.

Cette architecture du dispositif selon l'invention présente une combinaison originale dans le domaine du diagnostic de performance énergétique ou thermique d'un Local. Elle offre en effet la possibilité de réaliser une identification efficace des caractéristiques thermiques du Local en régime transitoire, de façon automatique sans l'intervention d'un opérateur, sauf pour les phases initiales de programmation ou de mise au point éventuelle du dispositif lors de son installation.

A partir du moyen d'action sur la commande du chauffage du Local 3, le dispositif selon l'invention peut créer des variations de la température intérieure du Local pour effectuer l'identification des coefficients d'une équation caractéristique d'un modèle thermique du Local équipé de ladite installation par les procédés d'extraction des séries de mesures 6, de filtrage des mesures 7 par exemple, et d'identification des coefficients de l'équation caractéristique du modèle thermique du Local équipé de ladite installation 8. Par exemple, le dispositif selon l'invention peut utiliser le fil pilote de commande du chauffage. Le fil pilote est soit celui du radiateur d'une pièce, soit celui d'un gestionnaire d'énergie qui commande plusieurs radiateurs. La coupure ou la mise en route du chauffage sont alors effectuées par le dispositif selon l'invention en envoyant les signaux normalisés de démarrage ou d'arrêt sur le fil pilote.

Le calcul des coefficients d'une équation caractéristique dudit modèle thermique du Local s'effectue selon une chaîne comportant un moyen d'extraction des séries de mesures 6, un moyen de filtrage pour supprimer les bruits éventuels 7, un moyen utilisant une ou plusieurs méthodes d'identification 8. A partir desdits coefficients, on peut mener notamment des calculs sur le comportement thermique en régime transitoire du Local. Les algorithmes de traitement numérique des données dans les moyens précités s'appuient sur des méthodes décrites dans les ouvrages scientifiques principalement dans les domaines des mathématiques ou de l'automatique.

L'identification des caractéristiques thermiques du Local équipé de ladite installation, sans intervention de l'opérateur, est réalisée par le dispositif selon l'invention à partir des mesures saisies à intervalle de temps régulier $\Delta t$ pendant une durée $n_1 \Delta t$, opération qui peut être répétée pour améliorer la précision des résultats ou pour saisir des changements dans les caractéristiques thermiques du Local.

Le diagnostic de performance énergétique du Local est rendu automatique au moyen du dispositif selon l'invention, grâce à l'architecture originale des moyens utilisés, et l'utilisation d'algorithmes numériques. Ceci est un changement important par rapport aux pratiques de diagnostic actuelles faisant appel à un opérateur qui doit se déplacer pour analyser le Local. Le dispositif selon l'invention permet donc une généralisation du diagnostic de performance énergétique d'un Local, notamment dans les nombreux logements anciens pour lesquels il est important et utile de réaliser ce diagnostic. Rendu automatique et autonome, le diagnostic de performance énergétique du Local par le dispositif selon l'invention peut être facilement utilisé dans de nombreuses applications, en étant associé à des dispositifs de réduction de la consommation d'énergie du logement (contrôle ou régulation des appareils de chauffage ou des gestionnaires d'énergie, etc.), ou pour vérifier et valider les performances d'un Local (respect de la réglementation thermique ou de labels, etc.).

Dans les algorithmes de traitement numérique du dispositif selon l'invention, le procédé d'identification trouve les caractéristiques du modèle, c'est-à-dire les valeurs des coefficients des équations mathématiques qui décrivent le comportement thermique en régime transitoire du Local. Ce modèle peut être plus ou moins compliqué. Mais, plus le modèle est compliqué et plus il faut un algorithme puissant pour calculer les paramètres plus nombreux du modèle. Des ouvrages scientifiques donnent les équations qui décrivent les transferts thermiques dans l'habitat. Ces équations font par exemple intervenir la résistance thermique et l'inertie du Local, le comportement du chauffage, les températures intérieure et extérieure, etc.

Le modèle est décrit par des équations différentielles de degré plus ou moins élevé.

En régime permanent établi, on a vu que le modèle se réduit à la résistance thermique R telle que : $\phi = 1/R\,(\theta_i - \theta_{ext})$ où : $\theta_i$ est la température intérieure du Local, $\theta_{ext}$ la température extérieure et R la résistance thermique du Local. Ce flux de déperdition thermique est à compenser par le chauffage.

Le principe du dispositif selon l'invention est avantageusement applicable pour d'autres modèles plus complets décrivant le comportement thermique du Local en régime transitoire, faisant intervenir la résistance thermique, la capacité thermique, les éléments représentant le chauffage, etc.

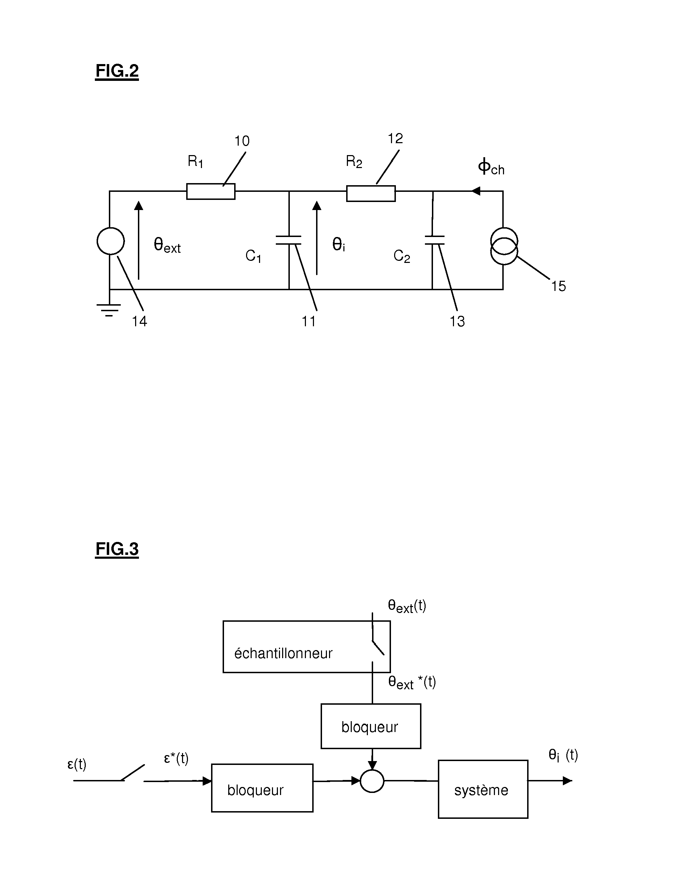

En référence à la figure 2, le procédé utilise avantageusement un modèle des échanges thermique du Local sous la forme pratique d'un schéma électrique équivalent. Le modèle intègre :

- les déperditions thermiques au travers de l'enveloppe du Local (sol, murs, vitrages, portes et plafond ou couverture), représentées sous la forme d'une résistance $R_1$ (10) ;
- la capacité thermique de la masse à chauffer, représentée par une capacité $C_1$ (11) ;
- les échanges thermiques entre l'installation de chauffage et l'air ambiant, représentés sous la forme d'une résistance $R_2$ (12) ;
- la capacité thermique de l'installation de chauffage du Local, représentée par une capacité $C_2$ (13) ;
- la température extérieure, simulée par la source de tension $\theta_{ext}$ (14) ;
- le flux thermique généré par le chauffage du Local, représenté par la source de courant $\phi_{ch}$ (15), et donné par la puissance de chauffage.

La température intérieure est notée $\theta_i$.

La mise en équation sous forme de la transformée de Laplace, avec l'opérateur p, du circuit électrique de la figure 2 donne :

$$\theta_i = [(1 + R_2 C_2\, p)/(a\, p^2 + b\, p + 1)]\theta_{ext}$$

$$+ [1/(a\, p^2 + b\, p + 1)]\, R_1\, \phi_{ch} \qquad \text{(équation 4)}$$

$a = R_1 R_2 C_1 C_2$   $b = R_1 C_1 + R_2 C_2 + R_1 C_2$

La mise sous forme échantillonnée avec une période d'échantillonnage $T_e = \Delta t$ de l'équation 4 permet, selon le schéma de principe décrit figure 3, d'exprimer la relation temporelle échantillonnée aux instants $nT_e$ (n entier naturel), reliant la température intérieure $\theta_i$, la température extérieure $\theta_{ext}$, et le flux de chauffage $\theta_{ch}$, sous la forme de l'équation 5. $\varepsilon(t)$ est l'écart entre la température intérieure et la température de consigne $\theta_{cons}$ à laquelle est régulée la température intérieure du Local par l'installation de chauffage.

$$\theta_i(nT_e) = \theta_{ext}(nT_e) + R_1\, \phi_{ch}\, \{1 + [\tau_1/(\tau_2 - \tau_1)]e^{-(nTe)/\tau 1}$$

$$+ [\tau_2/(\tau_1 - \tau_2)]e^{-(nTe)/\tau 2}\} \qquad \text{(équation 5)}$$

$$\theta_i(nT_e) = \theta_{ext}(nT_e) + \lambda_0 + \lambda_1\, e^{-(nTe)/\tau 1} + \lambda_2\, e^{-(nTe)/\tau 2}$$

$$\text{(équation 6)}$$

$\tau_1$ et $\tau_2$ étant les constantes de temps caractéristiques du modèle.

Le comportement du modèle thermique du Local en régime transitoire est défini par les équations 5 ou 6.

Le dispositif selon l'invention permet d'identifier les coefficients caractéristiques $\lambda_0$, $\lambda_1$, $\lambda_2$, de l'équation caractéristique du modèle thermique du Local donnée par l'équation 6.

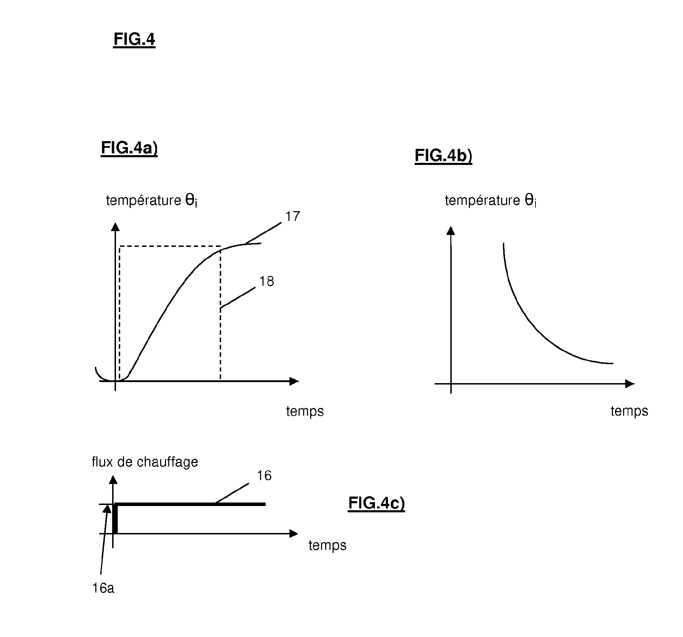

Dans un premier mode de réalisation du dispositif selon l'invention, les mesures des températures intérieures et extérieures sont effectuées pendant un intervalle de temps de montée en température du Local, soit la durée $n_1\Delta t$ précitée, sous l'action du chauffage (régime forcé) en référence à la figure 4a, ou les mesures sont effectuées pendant un intervalle de temps suivant la coupure du chauffage (régime libre) soit la durée $n_1\Delta t$, en référence à la figure 4b.

L'intervalle de temps de mesure, soit la durée $n_1\Delta t$, doit être suffisamment long, correspondant à un écart significatif entre la température intérieure initiale (début des mesures de températures) et finale (fin des mesures) ; il faut en effet qu'il y ait suffisamment de changement de la température intérieure 18 pour pouvoir identifier les coefficients caractéristiques de l'équation du modèle du Local, par exemple de l'ordre de 5 à 10 degrés Celsius dans notre maquette.

La méthode selon ce mode de réalisation, en référence à la figure 4, consiste en effet à agir sur la commande du chauffage pour produire un échelon de flux de chauffage $\phi_{ch\_M}$ (16a), dit entrée du modèle, tel qu'il est précisé ci-après et mesurer la réponse du système, représenté par le Local équipé de ladite installation de chauffage, sur la température intérieure $\theta_i$ (dit sortie du modèle). La température $\theta_{ext}$ est également mesurée.

Par le biais d'un moyen d'action sur la commande de chauffage, le dispositif selon l'invention interrompt le chauffage pendant un intervalle de temps d'une durée suffisante $n_2\Delta t$ pour abaisser la température intérieure du Local de plusieurs degrés ; puis, remet en fonctionnement le chauffage (échelon de flux de chauffage 16, figure 4c) pendant la durée nécessaire $n_1\Delta t$ pour obtenir une variation suffisante de la température intérieure $\theta_i$.

A la remise en fonctionnement, le chauffage du Local est à puissance maximale de chauffage $\phi_{ch\_M}$, jusqu'à ce qu'il atteigne la température de consigne de chauffage du Local définie par l'occupant. Le dispositif selon l'invention comporte donc des moyens donnant l'information de la puissance maximale de chauffage du Local 4. Dans la pratique, cette puissance est avantageusement donnée dans les caractéristiques du système de chauffage, mais peut être obtenue aisément par tout moyen de l'état de l'art.

Le modèle du second degré décrit par l'équation 5 ou l'équation 6 est dit "suramorti" et dans ce cas, la réponse de la sortie à un échelon de l'entrée 16 est une courbe 17 de la forme de celle présentée dans la figure 4a.

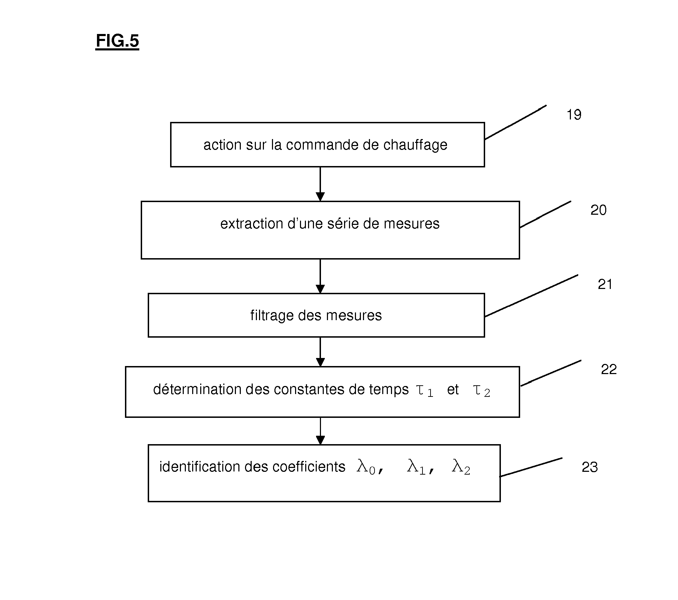

Le dispositif selon l'invention réalise les opérations selon l'organigramme de la figure 5 :

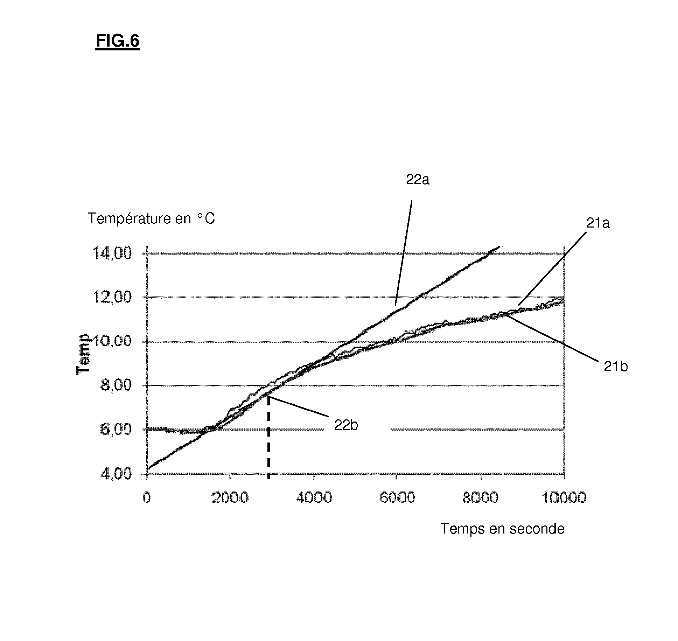

- action sur la commande de chauffage : coupure pendant une durée $n_2\Delta t$ pour faire baisser la température intérieure du Local puis remise en fonctionnement pour augmenter la température intérieure jusqu'à la température de consigne de chauffage 19 ;
- extraction d'une série de mesures 20 sur une durée $n_1\Delta t$ pendant la montée en température ;
- filtrage des mesures 21 pour supprimer les bruits qui perturbent l'analyse du régime transitoire et l'identification ;
- détermination des constantes de temps $\tau_1$ et $\tau$ précitées 22, réalisée à partir, notamment, du principe d'une méthode graphique dite de la tangente, qui selon l'invention détermine le positionnement de cette tangente 22a à partir de la détermination de l'instant d'annulation de la dérivée (au sens mathématique) de la différence entre la température intérieure et la température extérieure (point d'inflexion 22b, figure 6). Cette méthode est avantageusement réalisée par le dispositif selon l'invention sous une forme numérique permettant son application de façon automatique. La figure 6 montre la courbe des mesures de $\theta_i - \theta_{ext}$ (21a) et l'effet du filtrage des mesures 21b nécessaire notamment pour bien repérer la tangente.
- identification des coefficients caractéristiques $\lambda_0$, $\lambda_1$, $\lambda_2$ (23), de l'équation caractéristique du modèle thermique donnant le comportement en régime transitoire du Local à partir des mesures de la température intérieure, de la température extérieure et de l'information de la puissance maximale de chauffage du Local $\phi_{ch\_M}$, en référence à l'équation 6.

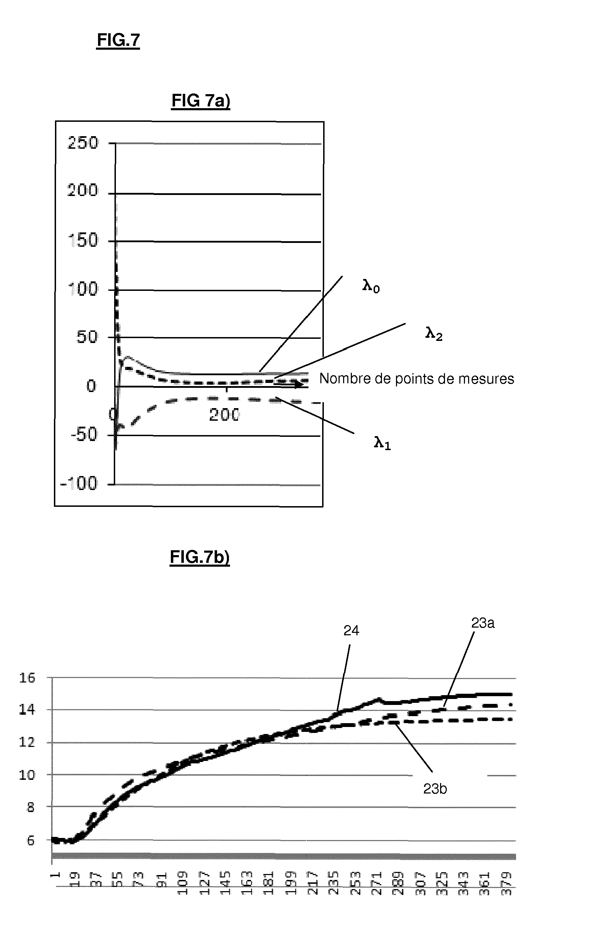

Obtenues à partir de la maquette du dispositif selon l'invention, et en référence à l'organigramme de la figure 5, la figure 7a montre un résultat de l'identification 23 et la figure 7b, la comparaison entre la mesure de la différence de températures $\theta_i - \theta_{ext}$ (24) et l'évolution temporelle de cette différence donnée par le modèle représenté par l'équation 6 selon deux méthodes d'identification ; on note que $\theta_i - \theta_{ext}$ mesurée 24 est proche des réponses $\theta_i - \theta_{ext}$ du modèle obtenues par deux méthodes d'identification 23a et 23b.

Un seconde mode de réalisation du dispositif selon l'invention, utilise un procédé d'identification en temps réel des caractéristiques thermiques du Local, c'est-à-dire directement pendant le fonctionnement normal du chauffage, comme il est décrit ci-après.

Lorsqu'il n'est pas possible ou aisé d'agir sur la commande du chauffage, le dispositif selon l'invention utilise un moyen de mesure de la puissance de chauffage du Local 5. Dans ce cas, l'identification des coefficients du modèle thermique du Local selon les procédés (6), (7), (8) est réalisée de façon récursive au fur et à mesure de l'acquisition à intervalle de temps $\Delta t$, des données de mesures des températures intérieure et extérieure et de la puissance de chauffage.

Le procédé d'identification en temps réel utilise alors un modèle thermique simplifié du Local équipé de ladite installation de chauffage sous la forme d'un premier ordre caractérisé par un gain $K_0$ et une constante de temps $\tau$, représenté sous la forme suivante :

$$s(t) = \theta_i(t) - \theta_{ext}(t) \qquad \text{(équation 7)}$$

$$\tau \, ds(t)/dt = -s(t) + K_0 \, \phi_{ch}(t) \qquad \text{(équation 8)}$$

Le procédé d'identification en temps réel utilise les mesures de la température intérieure $\theta_i$, de la température extérieure $\theta_{ext}$ et de la puissance de chauffage $\phi_{ch}$ du Local, saisies à intervalle de temps $\Delta t$.

s est l'écart entre la température extérieure, et la température intérieure du Local régulée par le système de chauffage à la consigne $\theta_{cons}$.

Le moyen de calcul numérique ne comprend que des valeurs discrètes de mesures selon un échantillonnage de période $T_e = \Delta t$. Le modèle implanté dans notre maquette est donc discret et récursif avec pour représentation l'équation liant l'entrée $\phi_{ch}$ et la sortie s tel que :

$$s(nT_e) = \alpha \, s[(n-1)T_e] + \beta \, \phi_{ch}[(n-1)T_e] \qquad \text{(équation 9)}$$

Avec :

$s(nT_e) = \theta_i (nT_e) - \theta_{ext} (nT_e)$, mesure de la différence à l'instant d'échantillonnage $n T_e$ de la mesure de la température intérieure et de la température extérieure.

$s[(n-1)T_e] = \theta_i [(n-1)T_e] - \theta_{ext} [(n-1)T_e]$, mesure de la différence à l'instant d'échantillonnage précédent $(n-1)T_e$ de la mesure de la température intérieure et de la température extérieure.

$\phi_{ch} [(n-1)T_e]$ mesure de la puissance de chauffage du Local à l'instant d'échantillonnage précédent $(n-1)T_e$.

$\alpha$ et $\beta$ étant liés à $K_0$ et $\tau$ par :

$$\alpha = \exp (-T_e/ \tau) \text{ et } \beta = (1 - \alpha) K_0$$

L'équation 9 traduit le besoin de puissance de chauffage nécessaire pour maintenir la température de consigne de chauffage correspondant au confort souhaité par l'utilisateur, en fonction des variations de la température extérieure.

Le procédé d'identification fonctionne en temps réel à partir du traitement des mesures $s(nT_e)$, $s[(n-1)T_e]$ et $\phi_{ch} [(n-1)T_e]$ ce qui permet de déterminer les coefficients caractéristique $\alpha$ et $\beta$ de ce modèle récursif décrit par l'équation 9 pour suivre les caractéristiques thermiques du Local. Et, ledit modèle décrit par l'équation 9 a par ailleurs une réponse de type exponentielle du premier ordre en sortie si on lui applique un échelon de chauffage en entrée.

L'installation de chauffage d'un Local est utilisée pour assurer un certain niveau de température de l'air intérieur au travers d'une consigne de température choisie par l'occupant $\theta_{cons}$. L'élaboration d'une Référence temporelle de la consommation de chauffage 33 est une notion originale qui serait utile dans la problématique de réduction des consommations d'énergie dans le bâtiment. En effet, il serait important de pouvoir disposer d'une telle Référence pour notamment connaître les économies apportées, soit dans l'amélioration de l'isolation du logement, soit dans l'amélioration de la gestion ou de la régulation du chauffage. En particulier, la connaissance de ces économies va être nécessaire dans la répartition des charges entre le locataire et le propriétaire dans les logements qui feront l'objet de travaux d'amélioration des performances thermiques du logement par le propriétaire.

Pour un propriétaire, cela permet de rembourser les travaux en partageant avec le locataire l'économie de charges. Pour le futur acheteur d'un logement, cela permet d'évaluer l'économie de charges par rapport à la rénovation thermique du logement.

Pour faire des économies d'énergie de chauffage, l'utilisateur a la possibilité :

- d'engager des travaux d'isolation qui modifient les caractéristiques thermiques du Local ;
- de changer à la baisse son niveau de confort en diminuant le niveau de la consigne ; cette action est gratuite ;
- à niveau de confort constant, d'utiliser un système « intelligent » qui va modifier la consigne de température en fonction de différentes informations : météo, absence de l'occupant du Local, etc.. Différents fabricants proposent des systèmes pour économiser l'énergie de chauffage. Ces systèmes ont un coût et les gains provenant des économies d'énergie doivent pouvoir compenser ce coût au plus vite.

Il importe donc que l'utilisateur puisse distinguer les économies apportées par ces améliorations ou ces systèmes de celles liées à la baisse du niveau de confort. A défaut, les économies risquent d'être attribuées à tort aux systèmes installés. Or, les systèmes existant ne donnent pas la possibilité de distinguer la réelle source des économies de chauffage.

Le dispositif selon l'invention apporte une solution à ce problème, décrite ci-après.

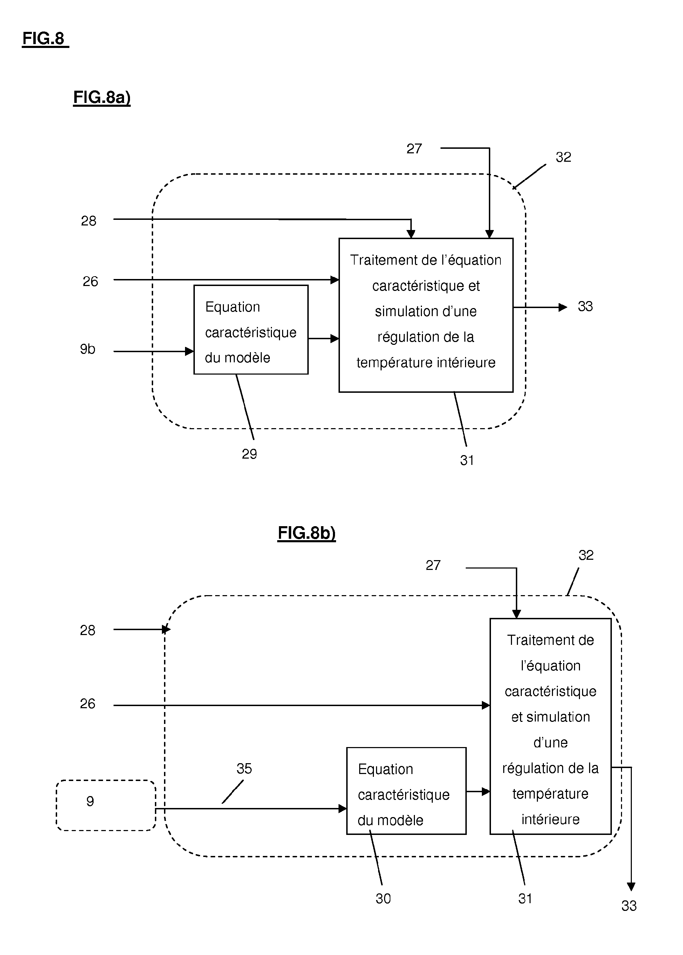

Le dispositif selon l'invention fournit à l'occupant une Référence temporelle de la consommation de chauffage du Local 33 qui est une évolution de la consommation de chauffage en fonction du temps. Cette Référence est calculée à partir du modèle thermique en régime transitoire du Local équipé de ladite installation. En référence à la figure 8, on repère par (32) le dispositif selon l'invention de détermination de la Référence temporelle de la consommation de chauffage, qui intègre soit des coefficients caractéristiques préprogrammés 9b ou soit des coefficients caractéristiques obtenus par le dispositif 9 selon l'invention comme décrit précédemment.

Le modèle thermique du Local 29 peut être programmé à partir d'un moyen quelconque tel que schématisé sur la figure 8a, par exemple en référence à l'équation 5.

Toutefois, le comportement de ce modèle thermique du Local doit être le plus proche possible du comportement thermique réel du Local pour que le calcul de la Référence temporelle de la consommation de chauffage soit le plus proche de la réalité. Ainsi, il est avantageux d'utiliser le dispositif selon l'invention qui s'appuie sur des mesures pour la détermination des coefficients d'une équation caractéristique du modèle thermique donnant le comportement en régime transitoire du Local 30.

En référence à la figure 8b, une fois les coefficients d'une équation caractéristique du modèle thermique du modèle thermique du Local obtenus par (9), comme par exemple en référence au modèle de la figure 2 et à l'organigramme de la figure 5, le dispositif selon l'invention élabore une Référence temporelle de la consommation de chauffage du Local par le moyen 31. Cette Référence est obtenue à partir de l'équation 6 avec les conditions suivantes :

- choix d'une période de temps 28, par exemple, un jour, un mois, une année, etc. pour laquelle la Référence temporelle est déterminée ;
- simulation d'une régulation de la température $\theta_i(t)$ à la consigne $\theta_{cons}(t)$ (26) ;
- choix d'une chronique de température $\theta_{ext}(t)$ (27), sur la période de temps considérée.

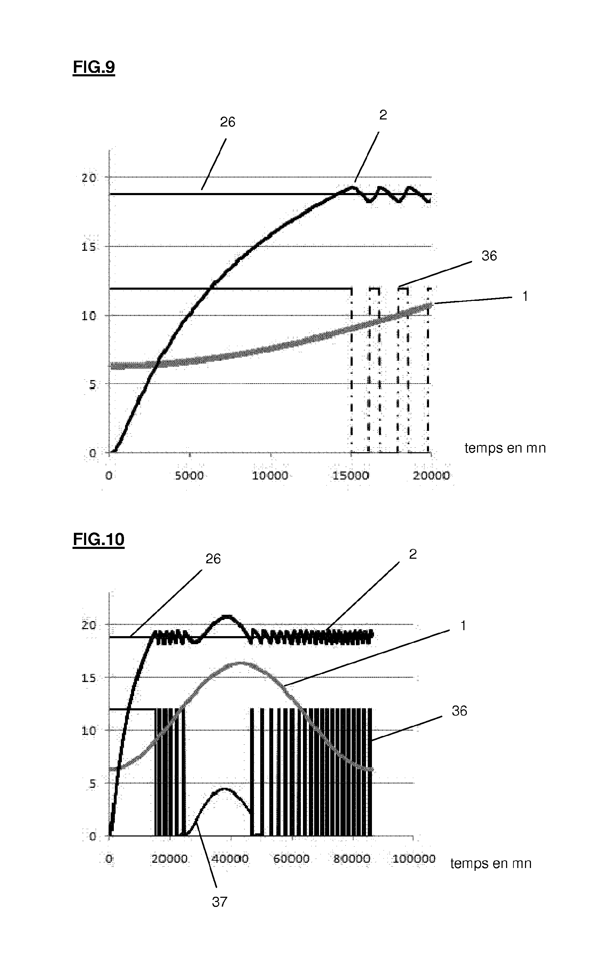

Dans ces conditions, la puissance de chauffage (et donc la consommation de chauffage au cours du temps), est définie puisque c'est la puissance nécessaire du système de chauffage qu'il faut pour maintenir la température $\theta_i(t)$ au voisinage de la consigne $\theta_{cons}(t)$. En référence à la figure 9, on observe le signal en créneaux 36 qui permet de calculer la consommation de chauffage du Local et donc ladite Référence temporelle.

L'élaboration de la Référence temporelle de la consommation de chauffage à partir des caractéristiques thermiques du Local serait très utile pour de nombreuses applications, par exemple, pour connaître l'écart de consommation de chauffage entre différentes situations. Il est possible de comparer différentes Références temporelles en fonction de variation de la consigne de chauffage ou de différentes chroniques de température extérieure ou de changement des caractéristiques du Local. Cette fonction est donc clé pour faire des économies ou des prévisions de consommation de chauffage d'un Local.

Prenons l'exemple du modèle décrit par l'équation 6, d'une période de temps D dans l'année x, d'une modification du Local entre l'année x et l'année x+1 (travaux d'isolation, amélioration du système de chauffage, etc.). Le dispositif selon l'invention permettant de calculer les économies de chauffage est caractérisé par l'organigramme suivant :

- calcul de la Référence temporelle de la consommation de chauffage durant la période D dans l'année x ($R_{efconsx}$), à partir, des coefficients caractéristiques identifiés par le dispositif selon l'invention, d'une consigne $Q_{cons}$ et d'une chronique de température $\theta_{ext}$ durant D dans l'année x ;
- ajustement des coefficients caractéristiques du modèle thermique en fonction de la consommation réelle de chauffage durant la période D dans l'année x ;
- identification des coefficients caractéristiques du modèle du Local l'année x+1 à l'aide du dispositif selon l'invention ;
- calcul de la Référence temporelle de la consommation de chauffage durant la même période D dans l'année x+1 ($R_{efconsx+1}$), à partir des nouveaux coefficients caractéristiques identifiés par le dispositif selon l'invention, de la même consigne $\theta_{cons}$ et de la même chronique de température $\theta_{ext}$ que durant la période D dans l'année x ;
- détermination de l'économie de la consommation de chauffage $R_{efconsx+1}$ - $R_{efconsx}$.

A partir de la maquette, la figure 9 présente la montée en température du Local obtenue à partir des coefficients caractéristiques de l'équation caractéristique d'un modèle thermique (figure 2) identifié par le dispositif selon l'invention (9), les créneaux de chauffage 36 et la température extérieure 1. La figure 10 présente la montée en température (température intérieure 2) du Local et son évolution pendant une journée, ainsi que l'effet de l'apport solaire 37.

Le dispositif selon l'invention peut avantageusement être complété par un moyen de mesure du flux solaire ce qui permet de compléter l'équation caractéristique d'un modèle donnant le comportement thermique en régime transitoire du Local et d'en tenir compte pour la détermination de la Référence temporelle de la consommation de chauffage.

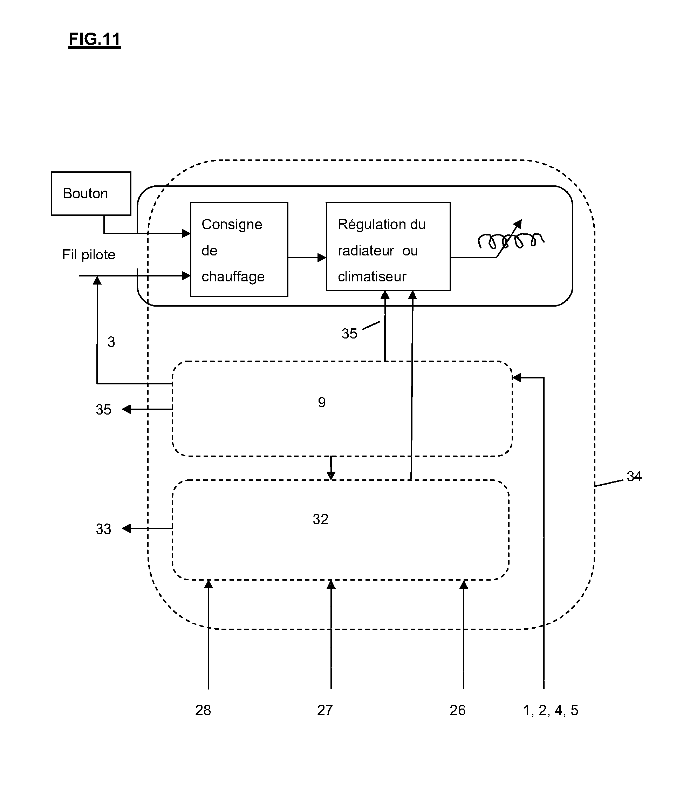

En référence à la figure 11, le dispositif selon l'invention est avantageusement intégré dans un système de chauffage ou un gestionnaire d'énergie pour concevoir un système de chauffage intelligent 34.

Un appareil de chauffage délivre habituellement une puissance thermique régulée. La régulation ajuste la puissance de chauffage en fonction de l'écart entre la température de l'air intérieur et une consigne de chauffage du Local définie par l'utilisateur.

Le système de chauffage intelligent est doté des fonctions supplémentaires du dispositif selon l'invention qui permettent d'identifier une équation caractéristique d'un modèle donnant le comportement thermique en régime transitoire du Local 9 ou de déterminer la Référence temporelle de la consommation de chauffage 32. Ainsi conçu, le système de chauffage intelligent 34 dispose des fonctions et des informations utiles à d'autres moyens (régulation, affichage, etc.) pour faire des économies de consommation de chauffage et les mesurer avec exactitude.

L'invention a été décrite pour un système de chauffage, elle peut bien sûr s'appliquer pour un système de refroidissement d'un Local, c'est-à-dire qu'elle peut s'appliquer plus généralement à un système de climatisation.

**Revendications**

1. Dispositif d'analyse du comportement thermique en régime transitoire d'un Local équipé d'une installation de chauffage ou de climatisation, comportant au moins :

- des moyens (1) destinés à fournir une mesure représentative de la température extérieure du Local ;
- des moyens (2) destinés à fournir une mesure représentative de la température intérieure du Local ;
- des moyens de commande (3) permettant d'agir sur la mise en fonctionnement ou l'arrêt de ladite installation pour créer des variations de la température intérieure du Local ;
- des moyens (4) ou (5) donnant une information ou une mesure de la puissance de chauffage ou climatisation du Local ;
- des moyens de traitement utilisant un modèle thermique d'évolution en régime transitoire de la température intérieure du Local équipé de ladite installation, organisés selon une chaîne qui comprend au moins un moyen d'extraction de séries desdites mesures (6), un moyen de filtrage desdites mesures (7) et un moyen d'identification (8) pour déterminer les coefficients caractéristiques (35) de l'équation dudit modèle thermique en régime transitoire,

le dispositif étant **caractérisé en ce que** ledit modèle comporte une combinaison de fonctions exponentielles du temps ou leur simplification, lesdits coefficients fournissant au moins un élément de type résistance traduisant des déperditions thermiques et au moins un élément de type capacité traduisant du stockage thermique, et la température intérieure évoluant sous l'effet de la température extérieure et d'une puissance de chauffage ou de climatisation injectée par ladite installation, lesdites mesures étant opérées à intervalle de temps suffisamment court pour rendre compte de l'évolution instantanée de la température intérieure caractérisant le régime transitoire.

2. Dispositif suivant la revendication 1, **caractérisé en ce que** :

- ledit modèle est du second ordre intégrant :

  - les déperditions thermiques au travers de l'enveloppe du Local représentées sous la forme d'une résistance (10) ;
  - la capacité thermique de la masse à chauffer, représentée par une capacité (11) ;
  - les échanges thermiques entre ladite installation et l'air ambiant représentés sous la forme d'une résistance (12) ;
  - la capacité thermique de l'ensemble de ladite installation, représentée par une capacité (13) ;
  - la température extérieure, simulée par une source de tension (14) ;
  - le flux thermique généré par ladite installation représenté par une source de courant (15), et donné par la puissance de chauffage ou climatisation ; et **en ce que**

- ledit modèle est représenté par une équation caractéristique discrète du second ordre établie pour chaque instant d'échantillonnage $nT_e$ (n entier naturel, n>1) séparé de l'instant suivant par un intervalle de temps $T_e = \Delta t$, ladite équation étant définie de la façon suivante :

$$\theta_i(nT_e) = \theta_{ext}(nT_e) + \lambda_0 + \lambda_1 e^{-(nTe)/\tau 1} + \lambda_2 e^{-(nTe)/\tau 2},$$

$\lambda_0$, $\lambda_1$, $\lambda_2$, étant liés, à $\tau_1$ et $\tau_2$ les deux constantes de temps caractéristiques dudit modèle reliées auxdites résistances et capacités (10) (11) (12) (13), à $\phi_{ch}$ le flux thermique (15) généré par ladite installation, $\theta_{ext}$ étant la température extérieure (1) au Local,
et **en ce que** lesdits moyens de traitement sont agencés pour déterminer les coefficients $\phi\lambda_0$, $\lambda_1$, $\lambda_2$, de ladite équation caractéristique à partir desdits moyens de traitement, de l'information de la puissance maximale de chauffage (4) et desdites mesures de la température intérieure (2) et la température extérieure (1) prises durant un intervalle de temps de variation de température du Local sous l'effet du chauffage ou de la climatisation ou durant un intervalle de temps de coupure du chauffage ou de la climatisation du Local.

3. Dispositif selon la revendication 2, **caractérisé en ce que** :

- lesdits moyens de commande (3) coupent pendant une durée $n_2\Delta t$ ($n_2$ entier naturel) le chauffage ou la climatisation pour faire varier la température intérieure du Local puis le remettent en fonctionnement pour varier en sens inverse la température intérieure jusqu'à la température de consigne de chauffage ou climatisation, (19) ;
- ledit moyen d'extraction (6) réalise l'extraction d'une série de mesures prises aux instants d'échantillonnage (20) sur une durée $n_1\Delta t$ ($n_1$ entier naturel) pendant la variation de température ;
- ledit moyen de filtrage (7) réalise le filtrage desdites mesures (21) ;
- ledit moyen d'identification (8) détermine lesdites constantes de temps caractéristiques $\tau_1$ et $\tau_2$ précitées (22), à partir, notamment, du principe d'une méthode graphique dite de la tangente déterminant le positionnement de cette tangente (22a) à partir de la détermination de l'instant d'annulation (22b) de la dérivée (au sens mathématique) de la différence entre la température intérieure et la température extérieure ;
- ledit moyen d'identification (8) identifie lesdits coefficients caractéristiques $\lambda_0$, $\lambda_1$, $\lambda_2$ (23), de ladite équation caractéristique dudit modèle thermique en régime transitoire à partir : des mesures aux instants d'échantillonnage de la température extérieure (1) et de la température intérieure (2), de l'information de la puissance maximale de chauffage ou de climatisation du Local (4) et des fonctions exponentielles de ladite équation comprenant lesdites constantes de temps $\tau_1$ et $\tau_2$.

4. Dispositif selon la revendication 1, **caractérisé en ce que** :

- ledit modèle est un modèle récursif sous forme discrète de période d'échantillonnage $T_e$ décrivant le comportement thermique en régime transitoire du Local équipé de ladite installation, sous la forme d'une équation du premier ordre de gain $K_0$ et de constante de temps caractéristique $\tau$, tel que :

$$s(nT_e) = \alpha \, s[(n-1)T_e] + \beta \, \phi_{ch}[(n-1)T_e]$$

et ce modèle ayant par ailleurs une réponse de type exponentielle du premier ordre en sortie si on lui applique un échelon de chauffage ou climatisation en entrée,
et $\alpha$ et $\beta$ étant les coefficients caractéristiques identifiés par ledit moyen d'identification,
Avec :

$s(nT_e) = \theta_i(nT_e) - \theta_{ext}(nT_e)$, mesure de la différence à l'instant d'échantillonnage $n\,T_e$ de la mesure de la température intérieure et de la température extérieure.
$s[(n-1)T_e] = \theta_i[(n-1)T_e] - \theta_{ext}[(n-1)T_e]$, mesure de la différence à l'instant d'échantillonnage précédent $(n-1)T_e$ de la mesure de la température intérieure et de la température extérieure.
$\phi_{ch}(n-1)T_e]$ mesure de la puissance de chauffage ou climatisation du Local à l'instant d'échantillonnage précédent $(n-1)T_e$.
$\alpha$ et $\beta$ étant liés à $K_0$ et $\tau$ par :

$$\alpha = \exp(-T_e/\tau) \quad \text{et} \quad \beta = (1 - \alpha)\, K_0$$

et, **en ce que**
- lesdits moyens de traitement (6), (7), (8) réalisent l'identification de $K_0$ et de $\tau$ pendant le fonctionnement normal de ladite installation de chauffage ou climatisation, de façon récursive au fur et à mesure de l'acquisition desdites mesures de la température intérieure (2), de la température extérieure (1) et de la puissance de chauffage ou de climatisation (5), à chaque instant d'échantillonnage $nT_e$ séparé de l'instant suivant par un intervalle de temps $T_{e\,=}\Delta t$.

5. Dispositif selon l'une quelconque des revendications précédentes, **caractérisé en ce qu'**il comporte en outre des moyens destinés à fournir, la consigne de chauffage ou climatisation du Local (26), une chronique de la température extérieure (27) sur une période de temps (28), et une régulation de la température intérieure pour élaborer une Référence temporelle de la consommation de chauffage ou climatisation du Local (33) sur ladite période de temps (28) à partir de l'équation caractéristique dudit modèle dont lesdits coefficients caractéristiques (35) ont été obtenus par lesdits moyens et à partir de la simulation de ladite régulation (31) qui donne la consommation de chauffage ou climatisation nécessaire pour maintenir la température intérieure au voisinage de la consigne de chauffage ou climatisation du Local (26).

6. Dispositif selon la revendication 5, **caractérisé en ce qu'**il comporte des moyens pour fournir une mesure représentative du flux solaire apportant une quantité de chaleur au Local (37), pour conférer à la Référence temporelle de la consommation de chauffage ou climatisation du Local (33) une évolution tenant compte de l'évolution temporelle du flux solaire.

7. Dispositif selon l'une quelconque des revendications 5 et 6, **caractérisé en ce que**, pour fournir une évaluation des économies de la consommation de chauffage ou climatisation du Local entre une période de temps D dans une année x, et la même période D de temps dans une année x+1 étant donné une modification des caractéristiques thermique du Local ou de l'installation de chauffage ou climatisation entre l'année x et l'année x+1, les moyens de traitement (6), (7), (8) effectuent les étapes suivantes :

- calcul de la Référence temporelle de la consommation de chauffage ou climatisation (33) durant la période D dans l'année x ($R_{efconsx}$), à partir desdits coefficients caractéristiques (35) identifiés, d'une consigne de chauffage ou climatisation du Local et d'une chronique de la température extérieure durant la période D dans l'année x ;
- ajustement desdits coefficients caractéristiques (35) de l'équation caractéristique dudit modèle thermique en fonction de la consommation réelle de chauffage ou climatisation durant la période D dans l'année x ;
- identification des nouveaux coefficients caractéristiques (35) de l'équation caractéristique dudit modèle thermique du Local l'année x+1 ;
- calcul de la Référence temporelle de la consommation de chauffage ou climatisation (33) durant la même période D dans l'année x+1 ($R_{efconsx+1}$), à partir des nouveaux coefficients caractéristiques (35) identifiés, de la même consigne de chauffage ou climatisation et de la même chronique de la température extérieure que durant la période D dans l'année x ;
- détermination de l'économie de la consommation de chauffage ou climatisation $R_{efconsx+1}$ - $R_{efconsx}$.

8. Installation de chauffage comportant un dispositif selon l'une quelconque des revendications précédentes.

9. Installation de climatisation comportant un dispositif selon l'une quelconque des revendications précédentes.

**Patentansprüche**

1. Vorrichtung zum Analysieren des Wärmeverhaltens im Übergangszustand eines Raums, der mit einer Heiz- oder Klimaanlage ausgestattet ist, die wenigstens Folgendes umfasst:

- Mittel (1) zum Liefern eines Messwerts, der für die Außentemperatur des Raums repräsentativ ist;
- Mittel (2) zum Liefern eines Messwerts, der für die Innentemperatur des Raums repräsentativ ist;
- Steuermittel (3), mit denen der Betrieb oder der Stillstand der Anlage zum Erzeugen von Änderungen der Innentemperatur des Raums bewirkt werden kann;
- Mittel (4) oder (5) zum Geben einer Information oder eines Maßes für die Heiz- oder Klimatisierungsleistung des Raums;
- Verarbeitungsmittel, die ein Wärmeentwicklungsmodell im Übergangszustand der Innentemperatur des mit der Anlage ausgestatteten Raums benutzen, organisiert zu einer Kette, die wenigstens ein Mittel (6) zum Extrahieren von Messwertserien, ein Mittel (7) zum Filtern der Messwerte und ein Identifikationsmittel (8) zum Bestimmen der charakteristischen Koeffizienten (35) der Gleichung des Wärmemodells im Übergangszustand umfasst,
wobei die Vorrichtung **dadurch gekennzeichnet ist, dass** das Modell eine Kombination von exponentiellen Funktionen der Zeit oder deren Vereinfachung umfasst, wobei die Koeffizienten wenigstens ein Element des Widerstandstyps liefern, das Wärmeverluste angibt, und wenigstens ein Element des Kapazitätstyps, das Wärmespeicherung angibt, und wobei sich die Innentemperatur unter der Wirkung der Außentemperatur und einer von der Anlage injizierten Heiz- oder Klimatisierungsleistung entwickelt, wobei die Messwerte in ausreichend kurzen Zeitintervallen gewonnen werden, um die momentane Entwicklung der Innentemperatur zu berücksichtigen, die den Übergangszustand charakterisiert.

2. Vorrichtung nach Anspruch 1, **dadurch gekennzeichnet, dass**:

- das Modell von der zweiten Ordnung ist, integrierend:

- die Wärmeverluste durch die Hülle des Raums, repräsentiert in Form eines Widerstands (10);
- die Wärmekapazität der zu heizenden Masse, repräsentiert durch eine Kapazität (11);
- die Wärmeaustausche zwischen der Anlage und der Umgebungsluft, repräsentiert in Form eines Widerstands (12);

- die Wärmekapazität der gesamten Anlage, repräsentiert durch eine Kapazität (13);
- die Außentemperatur, simuliert durch eine Spannungsquelle (14);
- den Wärmefluss, erzeugt durch die Anlage, repräsentiert durch eine Stromquelle (15) und angegeben durch die Heiz- oder Klimatisierungsleistung; und dadurch, dass

- das Modell durch eine charakteristische diskrete Gleichung der zweiten Ordnung repräsentiert wird, erstellt für jeden Abtastzeitpunkt $nT_e$ (wobei n eine natürliche ganze Zahl n>1 ist) von dem Zeitpunkt getrennt durch ein Zeitintervall $T_e = \Delta t$, wobei die Gleichung wie folgt definiert wird:

$$\theta_i(nT_e) = \theta_{ext}(nT_e) + \lambda_0 + \lambda_1 e^{-(nTe)/\tau 1} + \lambda_2 e^{-(nTe)/\tau 2},$$

wobei $\lambda_0$, $\lambda_1$, $\lambda_2$ mit den beiden charakteristischen Zeitkonstanten $\tau_1$ und $\tau_2$ des Modells, die mit den Widerständen und Kapazitäten (10) (11) (12) (13) verbunden sind, mit dem durch die Anlage erzeugten Wärmefluss $\phi_{ch}$ (15) verbunden sind,
wobei $\theta_{ext}$ die Außentemperatur (1) des Raums ist,
und dadurch, dass die Verarbeitungsmittel zum Ermitteln der Koeffizienten $\lambda_0$, $\lambda_1$, $\lambda_2$ der charakteristischen Gleichung auf der Basis der Verarbeitungsmittel, der Information über die maximale Heizleistung (4) und der Messwerte der Innentemperatur (2) und der Außentemperatur (1) ausgelegt sind, ermittelt während eines Zeitintervalls einer Temperaturänderung in dem Raum unter der Wirkung der Heizung und/oder Klimatisierung oder während eines Zeitintervalls einer Abschaltung der Heizung oder Klimatisierung des Raums.

3. Vorrichtung nach Anspruch 2, **dadurch gekennzeichnet, dass**:

- die Steuermittel (3) während einer Dauer $n_2\Delta t$ ($n_2$ ist eine natürliche ganze Zahl) die Heizung oder Klimatisierung abschalten, um die Innentemperatur des Raums zu verändern, dann wieder einschalten, um die Innentemperatur in umgekehrter Richtung zu verändern, bis auf den Sollwert der Heiz- oder Klimatisierungstemperatur (19);
- das Extraktionsmittel (6) eine Extraktion einer Messwertserie realisiert, die zu den Abtastzeitpunkten (20) über eine Dauer $n_1\Delta t$ (wobei $n_1$ eine natürliche ganze Zahl ist) während der Temperaturänderung genommen wird;
- das Filtermittel (7) die Filterung der Messwerte (21) durchführt;
- das Identifikationsmittel (8) die erwähnten charakteristischen Zeitkonstanten $\tau_1$ und $\tau_2$ (22) insbesondere auf der Basis des Prinzips einer Graphikmethode, tangential genannt, ermittelt, die die Positionierung dieser Tangente (22a) auf der Basis der Ermittlung des Aufhebungszeitpunkts (22b) der Ableitung (im mathematischen Sinne) der Differenz zwischen der Innentemperatur und der Außentemperatur ermittelt;
- das Identifikationsmittel (8) die charakteristischen Koeffizienten $\lambda_0$, $\lambda_1$, $\lambda_2$ (23) der charakteristischen Gleichung des Wärmemodells im Übergangszustand identifiziert auf der Basis von: Messwerten zu Abtastzeitpunkten der Außentemperatur (1) und der Innentemperatur (2), der Information über die maximale Heiz- oder Klimatisierungsleistung des Raums (4) und von exponentiellen Funktionen der Gleichung, die die Zeitkonstanten $\tau_1$ und $\tau_2$ umfasst.

4. Vorrichtung nach Anspruch 1, **dadurch gekennzeichnet, dass**:

- das Modell ein rekursives Modell in diskreter Form der Abtastperiode $T_e$ ist, die das Wärmeverhalten im Übergangszustand des mit der Anlage ausgestatteten Raums in Form einer Gleichung der ersten Ordnung des Gewinns $K_0$ und der charakteristischen Zeitkonstante $\tau$ beschreibt, so dass:

$$s(nT_e) = \alpha \, s[(n-1)T_e] + \beta \, \phi_{ch}[(n-1)T_e]$$

und wobei dieses Modell ferner eine exponentielle Ansprechung der ersten Ordnung am Ausgang hat, wenn am Eingang eine Heiz- oder Klimatisierungsstufe darauf angewandt wird,
und wobei $\alpha$ und $\beta$ die charakteristischen Koeffizienten sind, die von dem Identifikationsmittel identifiziert wurden, wobei:

$$s(nT_e) = \theta_i(nT_e) - \theta_{ext}(nT_e),$$

die Größe der Differenz zum Abtastzeitpunkt n $T_e$ des Messwertes der Innentemperatur und der Außentemperatur;

$$s[(n-1)T_e] = \theta_i[(n-1)T_e] - \theta_{ext}[(n-1)T_e],$$

die Größe der Differenz zum vorherigen Abtastzeitpunkt (n-1)$T_e$ des Messwertes der Innentemperatur und der Außentemperatur,

$$\phi_{ch}[(n-1)T_e],$$

die Größe der Heiz- oder Klimatisierungsleistung des Raums zum vorherigen Abtastzeitpunkt (n-1)$T_e$;
wobei $\alpha$ und $\beta$ mit $K_0$ und $\tau$ verbunden sind durch:

$$\alpha = \exp(-T_e/\tau) \text{ und } \beta = (1-\alpha)K_0$$

und dadurch, dass
- die Verarbeitungsmittel (6), (7), (8) die Identifikation von $K_0$ und von $\tau$ während des normalen Betriebs der Heiz- oder Klimaanlage auf rekursive Weise und im Einklang mit der Erfassung der Messwerte der Innentemperatur (2), der Außentemperatur (1) und der Heiz- oder Klimatisierungsleistung (5) zu jedem Abtastzeitpunkt $nT_e$ realisieren, von dem folgenden Zeitpunkt getrennt durch ein Zeitintervall $T_e = \Delta t$.

5. Vorrichtung nach einem der vorherigen Ansprüche, **dadurch gekennzeichnet, dass** sie ferner Mittel zum Liefern des Sollwertes der Heizung oder Klimatisierung des Raums (26), eines zeitlichen Verlaufs der Außentemperatur (27) über eine Zeitperiode (28) und eine Regelung der Innentemperatur zum Ausarbeiten einer zeitlichen Referenz des Heiz- oder Klimatisierungsverbrauchs des Raums (33) über die Zeitperiode (28) auf der Basis der charakteristischen Gleichung des Modells umfasst, deren charakteristische Koeffizienten (35) durch die Mittel und auf der Basis der Simulation der Regulierung (31) erhalten werden, die den Heiz- oder Klimatisierungsverbrauch angibt, der notwendig ist, um die Innentemperatur in der Nähe des Heiz- oder Klimatisierungssollwerts des Raums (26) zu halten.

6. Vorrichtung nach Anspruch 5, **dadurch gekennzeichnet, dass** sie Mittel zum Liefern eines Messwertes umfasst, der für den Solarfluss repräsentativ ist, der eine Wärmemenge in dem Raum (37) ergibt, um der zeitlichen Referenz des Heiz- oder Klimatisierungsverbrauchs in dem Raum (33) eine Entwicklung unter Berücksichtigung der zeitlichen Entwicklung des Solarflusses zu vermitteln.

7. Vorrichtung nach einem der Ansprüche 5 und 6, **dadurch gekennzeichnet, dass** zum Liefern einer Beurteilung der Sparsamkeit des Heiz- oder Klimatisierungsverbrauchs des Raums zwischen einer Zeitperiode D in einem Jahr x und derselben Zeitperiode D in einem Jahr x+1, unter einer Modifikation der Wärmecharakteristiken des Raums oder der Heiz- oder Klimaanlage zwischen dem Jahr x und dem Jahr x+1, die Verarbeitungsmittel (6), (7), (8) die folgenden Schritte ausführen:

- Berechnen der zeitlichen Referenz des Heiz- oder Klimatisierungsverbrauchs (33) während der Periode D im Jahr x ($R_{efconsx}$) auf der Basis der identifizierten charakteristischen Koeffizienten (35), eines Heiz- oder Klimatisierungssollwertes des Raums und eines zeitlichen Verlaufs der Außentemperatur während der Periode D im Jahr x;
- Justieren der charakteristischen Koeffizienten (35) der charakteristischen Gleichung des Wärmemodells in Abhängigkeit vom tatsächlichen Heiz- oder Klimatisierungsverbrauch während der Periode D im Jahr x;
- Identifizieren der neuen charakteristischen Koeffizienten (35) der charakteristischen Gleichung des Wärmemodells des Raums im Jahr x+1;
- Berechnen der zeitlichen Referenz des Heiz- oder Klimatisierungsverbrauchs (33) während derselben Periode D im Jahr x+1 ($R_{efconsx+1}$) auf der Basis der identifizierten charakteristischen neuen Koeffizienten (35) desselben Heiz- oder Klimatisierungssollwertes und desselben zeitlichen Verlaufs der Außentemperatur wie die Dauer der Periode D im Jahr x;
- Ermitteln der Sparsamkeit des Heiz- oder Klimatisierungsverbrauchs $R_{efconsx+1}$ - $R_{efconsx}$.

8. Heizanlage, die eine Vorrichtung nach einem der vorherigen Ansprüche umfasst.

9. Klimaanlage, die eine Vorrichtung nach einem der vorherigen Ansprüche umfasst.

**Claims**

1. Device for analysis of the thermal behavior in transient regime of a Room equipped with a heating or air conditioning installation, which contains at least:

    - some means (1) intended to supply a representative measure of the outside temperature of the Room;
    - some means (2) intended to supply a representative measure of the internal temperature of the Room;
    - some means of control (3) allowing to switch on or off the said installation to create variations of the internal temperature of the Room;
    - some means (4) or (5) giving an information or a measure of the power of heating or air conditioning of the Room;
    - some means of calculation using a thermal model of evolution in transient regime of the internal temperature of the Room equipped with the said installation, organized according to a chain which includes at least a means to collect series of the said measures (6), a means to filter the said measures (7) and a means of identification (8) to determine the characteristic' coefficients (35) of the equation of the said thermal model in transient regime, the device being **characterized in that** the said model contains a combination of time exponential functions or their simplification, the said coefficients giving at least an element like a resistor representing thermal losses and at least an element like a capacitor representing thermal storage, and the internal temperature evolving under the influence of the outside temperature and of the power of heating or air conditioning injected by the said installation, the said measures being operated in short enough interval of time to report the immediate evolution of the internal temperature characterizing the transient regime.

2. The device of claim 1, **characterized in that**:

    - the said model is of the second order including:
    - the thermal losses through the envelope of the Room represented by a resistor (10);
    - the thermal capacity of the mass to be warmed, represented by a capacitor (11);
    - the thermal exchanges between the said installation and the ambient air represented by a resistor (12);
    - the thermal capacity of said installation, represented by a capacitor (13);
    - the outside temperature, simulated by a voltage source (14);
    - the thermal flow generated by the said installation represented by a current source (15), and given by the power of heating or air conditioning;
    and in the fact that
    - the said model is represented by a second order discrete time characteristic equation for each sampling time $nT_e$ (n natural number, n>1) separated from the following by a time period $T_e = \Delta t$, the said equation being defined in the following way:

$$\theta_i(nT_e) = \theta_{ext}(nT_e) + \lambda_0 + \lambda_1\, e^{-(nTe)/\tau 1} + \lambda_2\, e^{-(nTe)/\tau 2},$$

$\lambda_0, \lambda_1, \lambda_2$, being linked, to $\tau_1$ and $\tau_2$ both characteristic time constants of the said model linked to said resistors and capacitors (10) (11) (12) (13), the thermal flow (15) generated by the said installation,
$\theta_{ext}$ being the outside temperature (1) of the Room,
and **in that** the said means of processing are ordered to determine the coefficients $\lambda_0, \lambda_1, \lambda_2$, of the said characteristic equation from the said means of calculation, the information of the maximal heating power (4) and the said measures of the internal temperature (2) and the outside temperature (1) taken during an interval of time of temperature variation of the Room under the influence of the heating or the air conditioning or during an interval of time during which the heating or the air conditioning of the Room is switched off.

3. The device of claim 2, **characterized in that**:

- the said means of control (3) switch off the heating or the air conditioning during a time $n_2\Delta t$ ($n_2$, natural number) to make varying the internal temperature of the Room then switch it on to make varying the internal temperature the opposite way until to reach the heating or air conditioning reference temperature (19);
- the said means of collect (6) realizes the collect of a series of measures taken at the sampling time instants (20) on a duration $n_1\Delta t$ ($n_1$ natural number) during the temperature variation;
- the said means of data filters (7) realizes the filtering of the said measures (21);
- the said means of identification (8) determines the said characteristic time constants $\tau_1$ and $\tau_2$ (22), based on, in particular, a graphic method of the tangent line determining the positioning of this tangent (22a) from the determination of the time instant (22b) where is coming to zero the derivation (in the mathematical sense) of the difference between the internal temperature and the outside temperature;
- the said means of identification (8) identifies the said characteristic coefficients $\lambda_0$, $\lambda_1$, $\lambda_2$ (23), of the said characteristic equation of the said thermal model for transient regime from: measures at the sampling time instants of the outside temperature (1) and the internal temperature (2), the information of the maximal power of heating or air conditioning of the Room (4) and the exponential functions of the said equation including the said time constants $\tau_1$ and $\tau_2$.

4. The device of claim 1, **characterized in that**:

- the said model is a recursive model under discrete form of sampling time period $T_e$ describing the thermal behavior in transient regime of the Room equipped with the said installation, like an equation of the first order of gain $K_0$ and characteristic time constant $\tau$, such as:

$$s(nT_e) = \alpha\, s[(n\text{-}1)T_e] + \beta\, \phi_{ch}\,[(n\text{-}1)T_e]$$

and this model having besides an exponential time response of the first order for its output when its control input is a step function of heating or air conditioning,
and $\alpha$ and $\beta$ being the characteristic coefficients identified by the said means of identification,
With:

$s(nT_e) = \theta_i\,(nT_e) - \theta_{ext}\,(nT_e)$, measure of the difference at the sampling time instant $nT_e$ of the measure of the internal temperature and the outside temperature.
$s[(n\text{-}1)T_e] = \theta_i\,[(n\text{-}1)T_e] - \theta_{ext}\,[(n\text{-}1)T_e]$, measure of the difference at the previous sampling time instant $(n\text{-}1)T_e$ of the measure of the internal temperature and the outside temperature.
$\phi_{ch}\,[(n\text{-}1)T_e]$ measure of the power of heating or air conditioning of the Room at the previous sampling time instant $(n\text{-}1)T_e$.
$\alpha$ and $\beta$ being linked to $K_0$ and $\tau$ by:

$$\alpha = \exp\,(\text{-}T_e/\tau) \text{ and } \beta = (1 - \alpha)\,K_0$$

and, in the fact that
- the said means of calculation (6), (7), (8) realize the identification of $K_0$ and $\tau$ during the normal functioning of the said heating or the air conditioning installation, by a recursive way according to the acquisition of the said measures of the internal temperature (2), the outside temperature (1) and the power of heating or air conditioning (5), every sampling time $nT_e$ each separated from the previous one by a time period $T_e = \Delta t$.

5. The device of any of the previous claims, **characterized in that** it contains at least some means intended to deliver, the heating or air conditioning reference of the Room (26), a time evolution of the outside temperature (27) over a period of time (28), and a regulation of the internal temperature to develop a time Reference of the consumption of heating or air conditioning of the Room (33) over the said period of time (28) from the characteristic equation of the said model from which the said characteristic coefficients (35) were obtained by the said means and from the simulation of the said regulation (31) which gives the consumption of heating or air conditioning that is necessary to maintain the internal temperature near the heating or air conditioning reference of the Room (26).

6. The device of claim 5, **characterized in that** it contains means to deliver a representative measure of the solar flow which brings a quantity of heat to the Room (37), to give the time Reference of the consumption of heating or air conditioning of the Room (33) an evolution taking into account the temporal evolution of the solar flow.

7. The device of any of the 5 and 6 claims, **characterized in that**, to deliver an evaluation of the savings of the heating or air conditioning consumption of the Room between a period of time D in one year x, and the same period D of time in one year x+1 given a thermal modification of the characteristics of the Room or of the heating or air conditioning installation between the year x and the year x+1, the means of calculation (6), (7), (8) make the following stages:

   - calculation of the time Reference of the consumption of heating or air conditioning (33) during the period D in the year x ($R_{efconsx}$), from the said characteristic coefficients (35) identified, a heating or air conditioning reference of the Room and the time evolution of the outside temperature during period D in the year x;
   - adaptation of the said characteristic coefficients (35) of the characteristic equation of the said thermal model according to the real consumption of heating or air conditioning during period D in the year x;
   - identification of the new characteristic coefficients (35) of the characteristic equation of the said thermal model of the Room in the year x+1;
   - calculation of the time Reference of the consumption of heating or air conditioning (33) during the same period D in the year x+1 ($R_{efconsx+1}$), from the new characteristic coefficients (35) identified, of the same heating or air conditioning reference and the same time evolution of the outside temperature as during period D in the year x;
   - determination of the saving of the heating or air conditioning consumption $R_{efconsx+1}$ - Refconsx.

8. Heating system including a device of any of the previous claims.

9. Air conditioning system including a device of any of the previous claims.

FIG.1

Extraction des
séries de
mesures

Filtrage
des
mesures

Identification des
coefficients de l'équation
caractéristique du modèle
thermique

Calculs du comportement
thermique en régime
transitoire du Local équipé de
l'installation de chauffage ou
de climatisation

EP 2 553 345 B1

**FIG.2**

**FIG.3**

22

FIG.4

FIG.4a)

FIG.4b)

température θ_i

17

18

temps

température θ_i

temps

flux de chauffage

16

FIG.4c)

temps

16a

**FIG.5**

action sur la commande de chauffage — 19

extraction d'une série de mesures — 20

filtrage des mesures — 21

détermination des constantes de temps $\tau_1$ et $\tau_2$ — 22

identification des coefficients $\lambda_0$, $\lambda_1$, $\lambda_2$ — 23

## FIG.6

## FIG.7

### FIG 7a)

$\lambda_0$

$\lambda_2$

Nombre de points de mesures

$\lambda_1$

### FIG.7b)

## FIG.8

### FIG.8a)

### FIG.8b)

FIG.9

temps en mn

FIG.10

temps en mn

**FIG.11**

## RÉFÉRENCES CITÉES DANS LA DESCRIPTION

**Documents brevets cités dans la description**

- FR 2506937
- FR 0165899
- EP 0165899 A
- FR 2739931
- FR 2694983